# EUROPÄISCHE PATENTSCHRIFT

(11) **EP 1 858 304 B1**
(45) Veröffentlichungstag und Bekanntmachung des Hinweises auf die Patenterteilung: **29.08.2012**
(21) Anmeldenummer: 07107311.8
(22) Anmeldetag: 02.05.2007
(51) Int. Cl.: H05B 41/285

(54) **Elektronisches Vorschaltgerät und Verfahren zur Inbetriebsnahme eines elektronisches Vorschaltsgeräts**
Electronic ballast and method for installing an electronic ballast
Ballast électronique et procédé de mise en serviced'un ballast électronique

(30) Priorität: 16.05.2006 DE 102006022837
(43) Veröffentlichungstag der Anmeldung: 21.11.2007
(73) Patentinhaber: OSRAM AG, 81543 München (DE)
(72) Erfinder: BOULOUEDNINE, Mourad, 82061, Neuried (DE)
(74) Vertreter: Raiser, Franz

(56) Entgegenhaltungen:
- EP-A1- 0 889 675
- WO-A1-00/07415
- WO-A1-03/034794
- WO-A1-03/039204
- WO-A1-03/055281
- WO-A1-2005/060320
- WO-A1-2006/006136
- WO-A1-2009/062552
- US-B1- 6 281 641

## Beschreibung

### Technisches Gebiet

Die vorliegende Erfindung betrifft ein elektronisches Vorschaltgerät mit einem Mikroprozessor, mindestens einem ersten Anschluss zum Anschließen einer Versorgungsspannung, einer Vielzahl von zweiten Anschlüssen zum Anschließen mindestens einer Lichtquelle, wobei die zweiten Anschlüsse mit dem Mikroprozessor gekoppelt sind. Sie betrifft überdies ein Verfahren zur Inbetriebnahme eines derartigen Vorschaltgeräts.

### Stand der Technik

Die vorliegende Erfindung betrifft zunächst ein Problem der manuellen oder automatischen Verdrahtung in Leuchten. Leuchten umfassen dabei üblicherweise alle diejenigen Elemente, die dazugehören, um eine Lampe aufzunehmen und zu betreiben, beispielsweise ein elektronisches Vorschaltgerät, die Lampe selbst, Reflektoren, Fassungen, etc. Häufig bezieht dabei ein Leuchtenhersteller Lampen und elektronische Vorschaltgeräte und montiert diese in einem Gehäuse, das nach seinen eigenen Wünschen gestaltet ist. Vorteilhaft hierbei ist, dass elektronische Vorschaltgeräte genormt und damit austauschbar sind. Bei der Herstellung der Leuchte werden beim Leuchtenhersteller das elektronische Vorschaltgerät und die mindestens eine Lampe zumindest zum Teil manuell verdrahtet. Besonders wenn mehrere Lampen mit einem elektronischen Vorschaltgerät verbunden werden sollen, besteht die Gefahr einer falschen Kontaktierung, insbesondere durch Verwechslung der Reihenfolge der Anschlüsse. Dies führt im ungünstigsten Fall dazu, dass ein Lampenbetrieb nicht möglich wird. Diese Art von Fehler kann jedoch in einem Test schnell erkannt werden. Deutlich problematischer sind Fehler, die sich durch eine falsche Kontaktierung ergeben, bei denen die Lampen gezündet werden können und Licht abgeben. Da derartige Fehler häufig erst durch Kundenreklamation nach mehreren 100 Std. Betriebsdauer auffallen, muss dann vor Ort der Fehler behoben werden. Da sich die Lampen dann bereits aufgrund der Falschverdrahtung und des damit einhergehenden Betriebs mit nicht für den Betrieb zugelassenen Parametern an ihrem Lebensdauerende befinden, müssen die Lampen bzw. Leuchten dann vielfach ausgetauscht werden. Je nach Zugänglichkeit der Leuchte, wobei hier insbesondere die Einbauhöhe, die Einbausituation sowie die Anzahl der eingebauten Lampen bzw. Leuchten von Bedeutung sind, kann eine Behebung des Fehlers sehr kostspielig und sehr zeitaufwändig werden.

Durch eine fehlerhafte, leuchteninterne Verdrahtung kann es beispielsweise bei Leuchten mit zwei Lampen zu einer Verdoppelung des Lampenstroms über einer Lampenelektrode kommen, was in einem Lampenfrühausfall nach bereits einem wenigen hundert Betriebsstunden resultiert.

Aus der WO 2006/006136 A1 ist eine Methode zum Schützen eines elektronischen Betriebsgerätes bekannt, bei der eine Hilfsspannungsversorgung zum Betrieb der Steuereinheit des elektronischen Betriebsgerätes abgeschaltet wird, wenn das elektronische Betriebsgerät falsch an die Netzversorgung angeschlossen ist.

Ähnliche Folgen ergeben sich, wenn mindestens eine für das elektronische Vorschaltgerät ungeeignete Lampe bei ansonsten technisch richtiger Verdrahtung zwischen Lampe und elektronischem Vorschaltgerät eingesetzt und betrieben wird. Beispielsweise können Benutzer bei einem Lampenwechsel in eine richtig verdrahtete Leuchte versehentlich Lampen, die geometrisch identisch sind, aber unschiedliche Nennleistung aufweisen, einsetzen. Selbst wenn das elektronische Vorschaltgerät die Fähigkeit aufweist, die Nennleistung der eingesetzten Lampe zu bestimmen, ergibt sich bei einem zwei- oder mehrflammigen elektronischen Vorschaltgerät ein Problem dadurch, wenn zwei Lampen unterschiedlicher Nennleistung eingesetzt sind. Ein zwei- oder mehrflammiges Vorschaltgerät kann nämlich nur Lampen gleicher Nennleistung betreiben. Auch in diesem Fall wird eine der beiden Lampen mit nicht zulässigen Betriebsparametern betrieben, was nach mehreren Betriebsstunden zu ihrer Zerstörung führt. Beispielsweise sind die Lampen H0 54W und HE 28W der Anmelderin mit einer Nennleistung von 54W bzw. 28 W äußerlich völlig identisch. Eine Unterscheidung ist nur aufgrund des Stempelaufdrucks möglich.

### Darstellung der Erfindung

Die Aufgabe der vorliegenden Erfindung besteht deshalb darin, ein elektronisches Vorschaltgerät der eingangs genannten Art und ein entsprechendes Verfahren zum Betreiben eines derartigen elektronischen Vorschaltgeräts derart weiterzubilden, dass die Gefahr einer fehlerhaften leuchteninternen Verdrahtung reduziert werden kann. Diese Aufgabe wird gelöst durch ein elektronisches Vorschaltgerät mit den Merkmalen von Patentanspruch 1 sowie durch ein Verfahren zur Inbetriebnahme eines elektronischen Vorschaltgeräts mit den Merkmalen von Patentanspruch 7.

Der vorliegenden Erfindung liegt die Erkenntnis zugrunde, den ohnehin vorhandenen Mikroprozessor zu nutzen, um die an mindestens zwei der zweiten Anschlüsse anliegenden Signale zur Erzeugung mindestens eines Kombinationssignals zu kombinieren. Wird nun in dem elektronischen Vorschaltgerät eine Tabelle abgelegt, in der ein Sollwertbereich des mindestens einen Kombinationssignals gespeichert ist, so kann mittels des Mikroprozessors der Istwert des mindestens einen Kombinationssignals mit dem entsprechenden Sollwertbereich des mindestens einen Kombinationssignals verglichen werden. Liegt der Istwert außerhalb des Sollwertbereichs, liegt eine Falschverdrahtung vor.

Wenngleich für die im Rahmen der vorliegenden Erfindung von einem Mikroprozessor zu erledigenden Aufgaben ein separater Mikroprozessor vorgesehen werden kann, so wird dennoch häufig bereits, wie erwähnt, ein ohnehin vorhandener Mikroprozessor verwendet werden. Dies hat seine Ursache darin, dass elektronische Vorschaltgeräte häufig durch Anpassung der Parameter des an ihrem Ausgang bereitgestellten Signals für den Betrieb einer Vielzahl unterschiedlicher Lampen ausgelegt sind. Die in Abhängigkeit der angeschlossenen Lampe zu variierenden Parameter sind beispielsweise Leistung, Betriebsfrequenz, etc. Zur Bestimmung der an das EVG angeschlossenen Lampe bzw. Lampen ist demnach ein derartiger Mikroprozessor bereits ausgelegt, relevante Lampenbetriebsdaten, wie Ströme, Spannungen, Widerstände, über die Vielzahl von zweiten Anschlüssen bei angeschlossener Lampe bzw. angeschlossenen Lampen zu prüfen.

Eine erfindungsgemäße Ausführungsform der vorliegenden Erfindung zeichnet sich dadurch aus, dass der Mikroprozessor ausgelegt ist, die Ausgabe eines Alarmsignals, zu veranlassen, wenn der Istwert des mindestens einen Kombinationssignals außerhalb des entsprechenden Sollwertbereichs des mindestens einen Kombinationssignals liegt. Insbesondere kann das Alarmsignal in Form eines akustischen und/oder optischen und/oder logischen Signals dargestellt werden. Dadurch kann eine Bedienperson oder eine Prüfeinrichtung einer automatischen Fertigung unmittelbar nach der Falschverdrahtung der mindestens einen Lampe oder unmittelbar nach dem Einsetzen einer Lichtquelle mit falscher Nennleistung informiert und zur Korrektur des Fehlers aufgefordert werden.

Bevorzugt weist hierbei das elektronische Vorschaltgerät mindestens einen Informationsanschluss, insbesondere mindestens einen DALI (Digital Adressable Lighting Interface)-Busanschluss auf, zur Veranlassung der Ausgabe des Alarmsignals.

Erfindungsgemäß umfasst das Alarmsignal die Information, dass die Lichtquelle falsch an das elektronische Vorschaltgerät angeschlossen ist, insbesondere, welche der zweiten Anschlüsse falsch an die mindestens eine Lichtquelle angeschlossen sind. Dadurch wird der Bedienperson bei einer Vielzahl von zweiten Anschlüssen eine schnelle Korrektur der Falschverdrahtung ermöglicht.

Besonders einfach lässt sich die bei der zuletzt genannten bevorzugten Ausführungsform erwähnte Information erhalten, wenn der Mikroprozessor ausgelegt ist, eine Vielzahl von Kombinationssignalen, insbesondere Kombinationssignale aller Kombinationsmöglichkeiten, zu erzeugen und auszuwerten. Je größer die Anzahl der ausgewerteten Kombinationssignale, umso eindeutiger lässt sich bei entsprechendem Ausbau der im elektronischen Vorschaltgerät angelegten Tabelle der Fehler spezifizieren.

Bei einer bevorzugten Weiterbildung ist das an einem zweiten Anschluss anliegende Signal durch eine Vielzahl von Parametern beschreibbar, wobei der Mikroprozessor ausgelegt ist, zur Erzeugung des mindestens einen Kombinationssignals zumindest die Differenz der Werte eines Parameters zweier Signale zu bilden. Besonders hervorzuheben ist hierbei die erfindungsgemäße Ausführungsform, bei der das mindestens eine Kombinationssignal dem elektrischen Widerstand zwischen den zwei betreffenden Anschlüssen entspricht.

Erfindungsgemäß ist der Mikroprozessor ausgelegt, das mindestens eine Kombinationssignal bei angeschlossener, jedoch noch nicht gezündeter Lichtquelle zu erzeugen. Durch diese Maßnahme wird eine Schädigung der angeschlossenen Lichtquelle infolge der falschen Verdrahtung zuverlässig verhindert.

Weitere vorteilhafte Ausführungsformen ergeben sich aus den Unteransprüchen.

Die im Vorhergehenden mit Bezug auf das erfindungsgemäße elektronische Vorschaltgerät erwähnten bevorzugten Ausführungsformen gelten in entsprechender Weise für das erfindungsgemäße Verfahren zum Betreiben eines elektronischen Vorschaltgeräts.

### Kurze Beschreibung der Zeichnung(en)

Im Nachfolgenden wird nunmehr ein Ausführungsbeispiel eines erfindungsgemäßen elektronischen Vorschaltgeräts unter Bezugnahme auf die beigefügten Zeichnungen näher beschrieben. Es zeigen:
- Fig. 1: in schematischer Darstellung zwei korrekt mit einem erfindungsgemäßen Vorschaltgerät verdrahtete Lampen;
- Fig. 2: eine Tabelle mit Verdrahtungsvarianten betreffend die beiden Lampen und das erfindungsgemäße elektronische Vorschaltgerät gemäß Fig. 1, die richtig sind;
- Fig. 3: eine Tabelle, die angibt, welcher ohmsche Widerstand zwischen jeweils zwei zweiten Anschlüssen eines erfindungsgemäßen elektronischen Vorschaltgeräts bei den Kombinationen gemäß Fig. 2 gemessen werden können;
- Fig. 4a: in schematischer Darstellung ein erstes Ausführungsbeispiel von zwei falsch mit einem erfindungsgemäßen Vorschaltgerät verdrahtete Lampen;
- Fig. 4b: in schematischer Darstellung ein zweites Ausführungsbeispiel von zwei falsch mit einem erfindungsgemäßen Vorschaltgerät verdrahtete Lampen;
- Fig. 5: eine Tabelle, die auszugsweise Verdrahtungsvarianten betreffend die beiden Lampen und das erfindungsgemäße elektronische Vorschaltgerät gemäß Fig. 4a und Fig. 4b zeigt, die falsch sind; und
- Fig. 6: eine Tabelle, die angibt, welcher ohmsche Widerstand zwischen jeweils zwei zweiten Anschlüssen eines erfindungsgemäßen elektronischen Vorschaltgeräts bei den Kombinationen gemäß Fig. 5 gemessen werden können.

### Bevorzugte Ausführung der Erfindung

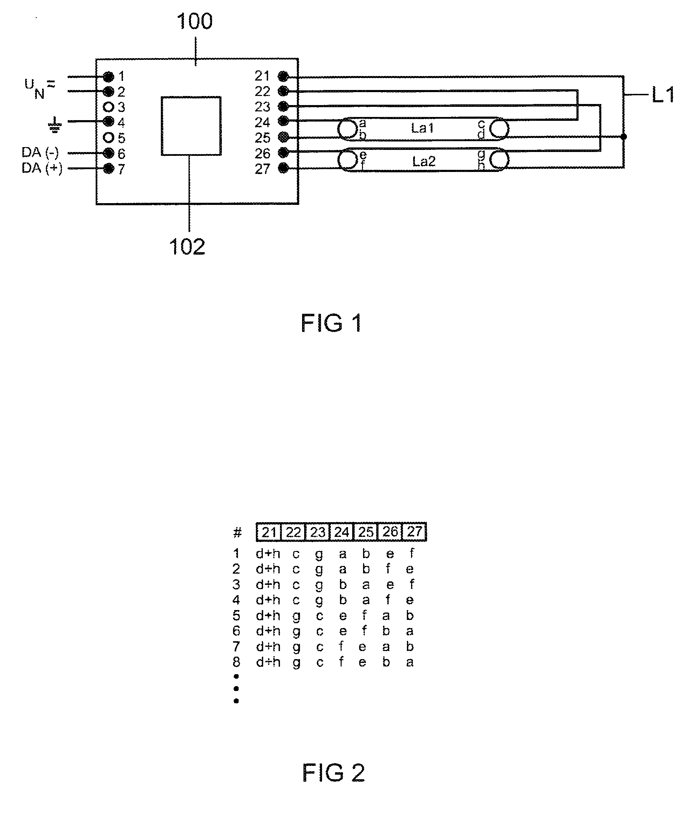

In Fig. 1 ist ein erfindungsgemäßes elektronisches Vorschaltgerät 100 mit einem Mikroprozessor 102 dargestellt, das mit einer ersten Lampe La1 und einer zweiten Lampe La2 verdrahtet ist. Das elektronische Vorschaltgerät 100 weist eingangsseitig einen Versorgungsspannungsanschluss für eine Versorgungsspannung U_{N} auf, der von den Anschlüssen 1 und 2 gebildet wird. Die Anschlüsse 3 und 5 sind nicht belegt. Anschluss 4 ist für den Anschluss an das Massepotenzial vorgesehen. Der Anschluss 6 ist für den DALI-Anschluss DA(-) vorgesehen, während der Anschluss 7 für den DALI-Anschluss DA(+) vorgesehen ist. Ausgangsseitig ist das elektronische Vorschaltgerät 100 mit den beiden Lampen La1, La2 verbunden. Die Lampe La1 weist dabei Anschlüsse a, b, c, d auf, während die Lampe La2 Anschlüsse e, f, g, h aufweist. Die gemeinsame Lampenleitung L1 ist mit dem Anschluss 21 des elektronischen Vorschaltgeräts 100 verbunden.

Fig. 2 zeigt eine Tabelle, in der oben die Anschlüsse des elektronischen Vorschaltgeräts angegeben sind, wobei in der Tabelle der Anschluss der jeweiligen Lampe La1, La2 angegeben ist, der mit dem entsprechenden Anschluss des elektronischen Vorschaltgeräts 100 verbunden ist. Es ergeben sich acht richtige Kombinationen, siehe die Zeilen 1 bis 8 der Tabelle in Fig. 2.

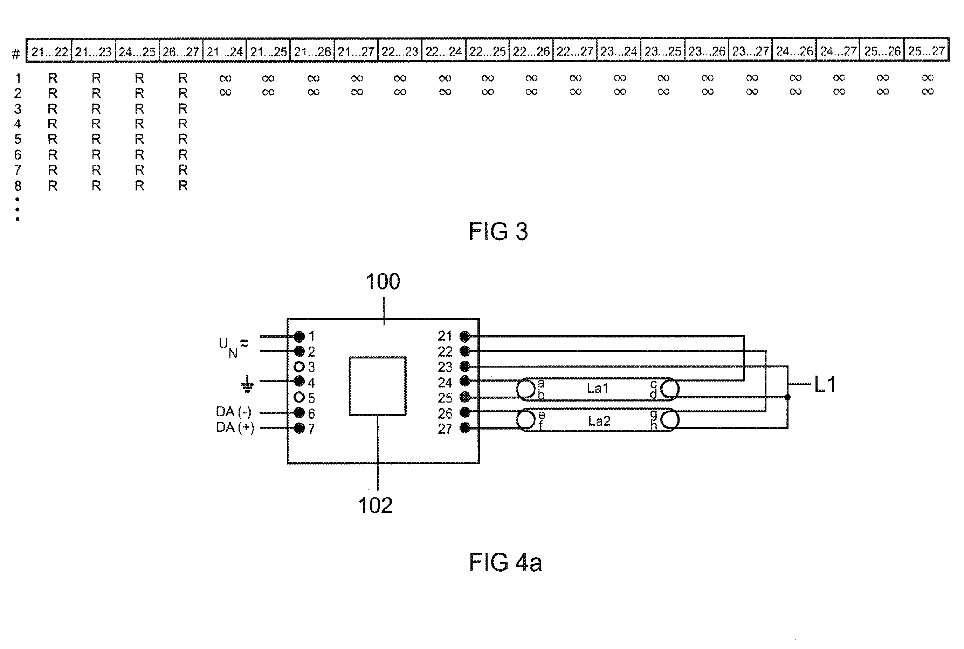

In Fig. 3 ist eine Tabelle wiedergegeben, die den zu messenden ohmschen Widerstand angibt, der entsprechend den in Fig. 2 angegebenen Verdrahtungsvarianten zwischen jeweils den beiden Anschlüssen gemessen werden kann, die in der Überschrift der Tabelle in Fig. 3 angegeben sind. In dieser Tabelle entspricht der Wert "R" dem ohmschen Widerstand der Wendelelektrode einer Lampe La1, La2. Demnach ergibt sich für die in Zeile 1 der Tabelle von Fig. 2 aufgeführte Verdrahtungsvariante zwischen den Anschlüssen 21 und 22 der Wert R, zwischen den Anschlüssen 21 und 23 der Wert R, zwischen den Anschlüssen 24 und 25 der Wert R und zwischen den Anschlüssen 26 und 27 der Wert R. Der zwischen allen anderen Kombinationen von Anschlüssen 21 bis 27 des elektronischen Vorschaltgeräts 100 gemessene Widerstand beträgt ∞.

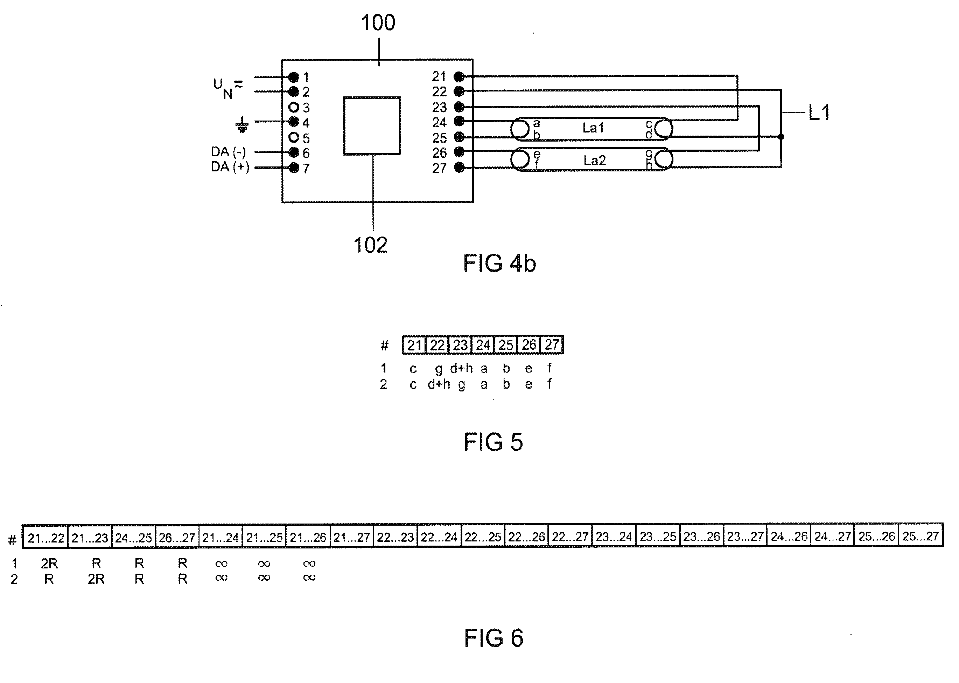

In den Figuren 4a und 4b entspricht das elektronische Vorschaltgerät dem elektronischen Vorschaltgerät von Fig. 1 und die Lampen La1, La2 denen von Fig. 1. Sie werden deshalb nicht nochmals beschrieben. Unterschiedlich zu Fig. 1 ist jedoch die Verdrahtung der gemeinsamen Leitung L1. In Fig. 4a ist die gemeinsame Leitung L1 mit dem Anschluss 23 des elektronischen Vorschaltgeräts 100 verbunden, während in Fig. 4b die gemeinsame Leitung L1 mit dem Anschluss 22 des elektronischen Vorschaltgeräts 100 verbunden ist. Eine derartige Falschverdrahtung würde zu einer Lampenschwärzung und einem Lampenfrühausfall führen.

Die Tabelle in Fig. 5 entspricht der Tabelle von Fig. 2, wobei nunmehr falsche Kombinationen aufgeführt sind. Die Zeile 1 entspricht der in Fig. 4a dargestellten Verdrahtungsvariante, während die Zeile 2 der in Fig. 4b dargestellten Verdrahtungsvariante entspricht. Weitere falschverdrahtete Varianten sind möglich, sind jedoch der besseren Übersichtlichkeit wegen nicht aufgeführt.

Fig. 6 entspricht der Tabelle von Fig. 3, wobei in Zeile 1 die zwischen den jeweiligen Anschlüssen zu messenden ohmschen Widerstände für die Verdrahtungsvariante von Fig. 4a und in Zeile 2 die für die Verdrahtungsvariante von Fig. 4b zu messenden ohmschen Widerstände wiedergegeben sind. Gemäß Fig. 6 kann demnach bei der Verdrahtungsvariante von Fig. 4a zwischen den Anschlüssen 21 und 22 ein ohmscher Widerstand von "2R" gemessen werden. Ein Vergleich mit den für richtige Kombinationen zu messenden ohmschen Widerständen gemäß Fig. 3 zeigt, dass dies eindeutig als Hinweis auf eine Falschverdrahtung zu werten ist. Entsprechend kann für die Verdrahtungsvariante von Fig. 4b zwischen den Anschlüssen 21 und 23, siehe Zeile 2 der Tabelle von Fig. 6, ebenfalls ein Wert von "2R" gemessen werden, was wiederum ein deutlicher Hinweis auf eine Falschverdrahtung zu werten ist.

Bei Feststellung einer Falschverdrahtung durch Vergleich der gemessenen Widerstandswerte, siehe Fig. 3 und Fig. 6, mit den Widerstandswerten einer in dem elektronischen Vorschaltgerät 100 abgelegten Tabelle, die einen Sollwertbereich definieren, beispielsweise +/-10 % vom optimalen Sollwert, kann festgestellt werden, ob eine falsche oder richtige Verdrahtung vorliegt. Im Falle einer festgestellten Falschverdrahtung kann über den DALI-Busanschluss DA (-) und DA (+) die Ausgabe eines Alarmsignals veranlasst werden. Alternativ zur Ausgabe eines Alarmsignals über den DALI-Busanschluss DA(-), DA(+) kann die mindestens eine Lampe La1, La2 auch derart vom elektronischen Vorschaltgerät 100 angesteuert werden, dass sie blinkt. Dadurch wird die Bedienperson ebenfalls schnell und auf einfache Weise über das Vorliegen einer Falschverdrahtung informiert.

## Patentansprüche

1. Elektronisches Vorschaltgerät mit
- einem Mikroprozessor (102);
- mindestens einem ersten Anschluss (1, 2) zum Anschließen einer Versorgungsspannung (U_{N});
- einer Vielzahl von zweiten Anschlüssen (21 bis 27) zum Anschließen mindestens einer Lichtquelle (La1, La2), wobei die zweiten Anschlüsse (21 bis 27) mit dem Mikroprozessor (102) gekoppelt sind; wobei
- der Mikroprozessor (102) ausgelegt ist, die an mindestens zwei der zweiten Anschlüsse (21, 22) anliegenden Signale zur Erzeugung mindestens eines Kombinationssignals zu kombinieren;
- das elektronische Vorschaltgerät (100) eine Tabelle umfasst, in der ein Sollwertbereich des mindestens einen Kombinationssignals abgelegt ist,
- der Mikroprozessor (102) weiterhin ausgelegt ist, zur Auswertung den Istwert des mindestens einen Kombinationssignals mit dem entsprechenden Sollwertbereich des mindestens einen Kombinationssignals zu vergleichen,
**dadurch gekennzeichnet, dass**
- der Mikroprozessor (102) weiterhin ausgelegt ist, die Ausgabe eines Alarmsignals zu veranlassen, wenn der Istwert des mindestens einen Kombinationssignals außerhalb des entsprechenden Sollwertbereichs des mindestens einen Kombinationssignals liegt;
- das Alarmsignal die Information umfasst, dass die mindestens eine Lichtquelle (La1, La2) falsch an das elektronische Vorschaltgerät (100) angeschlossen ist, insbesondere, welche der zweiten Anschlüsse (21 bis 27) falsch an die mindestens eine Lichtquelle (La1, La2) angeschlossen sind;
- das mindestens eine Kombinationssignal dem ohmschen Widerstand zwischen den zwei betreffenden Anschlüssen entspricht;
- der Mikroprozessor (102) ausgelegt ist, das mindestens eine Kombinationssignal bei angeschlossener, jedoch noch nicht gezündeter Lichtquelle (La1, La2) zu erzeugen.

2. Elektronisches Vorschaltgerät nach Anspruch 1,
**dadurch gekennzeichnet,**
**dass** der Mikroprozessor (102) ausgelegt ist, die Ausgabe eines Alarmsignals in Form eines akustischen und/oder optischen und/oder logischen Signals zu veranlassen.

3. Elektronisches Vorschaltgerät nach Anspruch 2,
**dadurch gekennzeichnet,**
**dass** das elektronische Vorschaltgerät (100) mindestens einen Informationsanschluss, insbesondere einen DALI-Busanschluss (DA(-), DA(+)) aufweist, zur Veranlassung der Ausgabe des Alarmsignals.

4. Elektronisches Vorschaltgerät nach einem der vorhergehenden Ansprüche,
**dadurch gekennzeichnet,**
**dass** der Mikroprozessor (102) ausgelegt ist, eine Vielzahl von Kombinationssignalen, insbesondere Kombinationssignale aller Kombinationsmöglichkeiten, zu erzeugen und auszuwerten.

5. Elektronisches Vorschaltgerät nach einem der vorhergehenden Ansprüche,
**dadurch gekennzeichnet,**
**dass** das an einem zweiten Anschluss (21 bis 27) anliegende Signal durch eine Vielzahl von Parametern beschreibbar ist, wobei der Mikroprozessor (102) ausgelegt ist, zur Erzeugung des mindestens einen Kombinationssignals zumindest die Differenz der Werte eines Parameters zweier Signale zu bilden.

6. Elektronisches Vorschaltgerät nach einem der vorhergehenden Ansprüche,
**dadurch gekennzeichnet,**
**dass** der Mikroprozessor (102) ausgelegt ist, das mindestens eine Kombinationssignal bei angeschlossener, jedoch noch nicht gezündeter Lichtquelle (La1, La2) zu erzeugen.

7. Verfahren zur Inbetriebnahme eines elektronischen Vorschaltgeräts, das einen Mikroprozessor (102), mindestens einen ersten Anschluss (1, 2) zum Anschließen einer Versorgungsspannung (U_{N}) und eine Vielzahl von zweiten Anschlüssen (21 bis 27) zum Anschließen mindestens einer Lichtquelle (La1, La2) umfasst, wobei die zweiten Anschlüsse mit dem Mikroprozessor (102) gekoppelt sind,
**gekennzeichnet durch** folgende, vor eine Zündung der mindestens einen angeschlossenen Lichtquelle erfolgen darf, **durchzu**führenden Schritte:
a)Erzeugen mindestens eines Kombinationssignals aus den an mindestens zwei der zweiten Anschlüsse (21, 22) anliegenden Signalen;
b)Vergleichen des Istwerts des mindestens einen Kombinationssignals mit einem entsprechenden Sollwertbereich des mindestens einen Kombinationssignals, wobei der Sollwertbereich des mindestens einen Kombinationssignals in einer Tabelle in dem elektronischen Vorschaltgerät (100) abgelegt ist;
c) Ausgeben eines Alarmsignals, wenn der Istwert des mindestens einen Kombinationssignals außerhalb des entsprechenden Sollwertbereichs des mindestens einen Kombinationssignals liegt, wobei das Alarmsignal die Information umfasst, dass die mindestens eine Lichtquelle (La1, La2) falsch an das elektronische Vorschaltgerät (100) angeschlossen ist, insbesondere, welche der zweiten Anschlüsse (21 bis 27) falsch an die mindestens eine Lichtquelle (La1, La2) angeschlossen sind.

## Claims

1. Electronic ballast with
- a microprocessor (102);
- at least one first connection (1, 2) for connecting a supply voltage (U_{N});
- a multiplicity of second connections (21 to 27) for connecting at least one light source (La1, La2), the second connections (21 to 27) being coupled to the microprocessor (102); wherein
- the microprocessor (102) is designed to combine the signals present at at least two of the second connections (21, 22) so as to generate at least one combination signal;
- the electronic ballast (100) comprises a table, in which a setpoint value range for the at least one combination signal is stored,
- the microprocessor (102) is further designed, for evaluation purposes, to compare the actual value of the at least one combination signal with the corresponding setpoint value range for the at least one combination signal, **characterized in that**
- the microprocessor (102) is further designed to initiate the output of an alarm signal when the actual value of the at least one combination signal is outside the corresponding setpoint value range for the at least one combination signal;
- the alarm signal comprises the information that the at least one light source (La1, La2) is incorrectly connected to the electronic ballast (100), in particular regarding which of the second connections (21 to 27) are incorrectly connected to the at least one light source (La1, La2);
- the at least one combination signal corresponds to the pure resistance between the two related connections;
- the microprocessor (102) is designed to generate the at least one combination signal when the light source (La1, La2) is connected, but has not yet been started.

2. Electronic ballast according to claim 1,
**characterized in that**
the microprocessor (102) is designed to initiate the output of an alarm signal in the form of an acoustic and/or optical and/or logic signal.

3. The electronic ballast according to claim 2,
**characterized in that**
the electronic ballast (100) has at least one information connection, in particular a DALI bus connection (DA(-), DA(+)), for initiating the output of the alarm signal.

4. Electronic ballast according to one of the preceding claims,
**characterized in that**
the microprocessor (102) is designed to generate and evaluate a multiplicity of combinations signals, in particular combination signals of all combination possibilities.

5. Electronic ballast according to one of the preceding claims,
**characterized in that**
the signal present at a second connection (21 to 27) is describable in terms of a multiplicity of parameters, the microprocessor (102) being designed to form at least the difference between the values of one parameter of two signals in order to generate the at least one combination signal.

6. Electronic ballast according to one of the preceding claims,
**characterized in that** the microprocessor (102) is designed to generate the at least one combination signal when the light source (La1, La2) is connected, but has not yet been started.

7. Electronic ballast startup method which comprises a microprocessor (102), at least one first connection (1, 2) for connecting a supply voltage (U_{N}) and a multiplicity of second connections (21 to 27) for connecting at least one light source (La1, La2), the second connections being coupled to the microprocessor (102), **characterized by** the following steps, which should be performed before starting of the at least one connected light source can take place:
a) generating at least one combination signal from the signals present at at least two of the second connections (21,22);
b) comparing the actual value of the at least one combination signal with a corresponding setpoint value range for the at least one combination signal, the setpoint value range for the at least one combination signal being stored in a table in the electronic ballast (100);
c) outputting an alarm signal when the actual value of the at least one combination signal is outside the corresponding setpoint value range for the at least one combination signal, the alarm signal comprising the information that the at least one light source (La1, La2) is incorrectly connected to the electronic ballast (100), in particular regarding which of the second connections (21 to 27) are incorrectly connected to the at least one light source (La1, La2).

## Revendications

1. Ballast électronique comprenant
- un microprocesseur (102) ;
- au moins une première connexion (1, 2) pour connecter une tension d'alimentation (U_{N}) ;
- une pluralité de deuxièmes connexions (21 à 27) pour connecter au moins une source de lumière (La1, La2), les deuxièmes connexions (21 à 27) étant couplées au microprocesseur (102) ;
- le microprocesseur (102) étant configuré pour combiner les signaux appliqués sur au moins deux des deuxièmes connexions (21, 22) afin de produire au moins un signal combiné ;
- le ballast électronique (100) contenant une table dans laquelle est déposée une gamme de valeurs de consigne dudit au moins un signal combiné,
- le microprocesseur (102) étant configuré en outre pour comparer, en vue de l'évaluer, la valeur réelle dudit au moins un signal combiné avec la gamme de valeurs de consigne correspondantes dudit au moins un signal combiné,
**caractérisé en ce que**
- le microprocesseur (102) est configuré en outre pour déclencher un signal d'alarme lorsque la valeur réelle dudit au moins un signal combiné est située en dehors de la gamme de valeurs de consigne correspondantes dudit au moins un signal combiné ;
- le signal d'alarme contient l'information que ladite au moins une source de lumière (La1, La2) est mal connectée au ballast électronique (100), en particulier lesquelles des deuxièmes connexions (21 à 27) sont mal connectées à ladite au moins une source de lumière (La1, La2) ;
- ledit au moins un signal combiné correspond à la résistance ohmique entre les deux connexions concernées;
- le microprocesseur (102) est configuré pour produire ledit au moins un signal combiné lorsque la source de lumière (La1, La2) est connectée mais pas encore allumée.

2. Ballast électronique selon la revendication 1,
**caractérisé en ce que**
le microprocesseur (102) est configuré pour déclencher l'émission d'un signal d'alarme sous forme d'un signal acoustique et/ou optique et/ou logique.

3. Ballast électronique selon la revendication 2,
**caractérisé en ce que**
le ballast électronique (100) possède au moins une connexion de transmission d'informations, en particulier une connexion de bus DALI (DA(-), DA(+)), pour déclencher l'émission du signal d'alarme.

4. Ballast électronique selon l'une des revendications précédentes,
**caractérisé en ce que**
le microprocesseur (102) est configuré pour produire et évaluer une pluralité de signaux combinés, en particulier des signaux combinés de toutes les combinaisons possibles.

5. Ballast électronique selon l'une des revendications précédentes,
**caractérisé en ce que**
le signal appliqué sur une deuxième connexion (21 à 27) peut être décrit par une pluralité de paramètres, le microprocesseur (102) étant configuré pour former au moins la différence des valeurs d'un paramètre de deux signaux afin de produire ledit au moins un signal combiné.

6. Ballast électronique selon l'une des revendications précédentes,
**caractérisé en ce que**
le microprocesseur (102) est configuré pour produire ledit au moins un signal combiné lorsque la source de lumière (La1, La2) est connectée mais pas encore allumée.

7. Procédé de mise en fonctionnement d'un ballast électronique comprenant un microprocesseur (102), au moins une première connexion (1, 2) pour connecter une tension d'alimentation (U_{N}) et une pluralité de deuxièmes connexions (21 à 27) pour connecter au moins une source de lumière (La1, La2), les deuxièmes connexions étant couplées au microprocesseur (102),
**caractérisé par** les étapes suivantes à effectuer avant qu'un allumage de ladite au moins une source de lumière ne puisse avoir lieu :
a) produire au moins un signal combiné à partir des signaux appliqués sur au moins deux des deuxièmes connexions (21, 22) ;
b) comparer la valeur réelle dudit au moins un signal combiné avec une gamme de valeurs de consigne correspondantes dudit au moins un signal combiné, la gamme de valeurs de consigne dudit au moins un signal combiné étant déposée dans une table contenue dans le ballast électronique (100) ;
c) émettre un signal d'alarme lorsque la valeur réelle dudit au moins un signal combiné est située en dehors de la gamme de valeurs de consigne correspondantes dudit au moins un signal combiné, le signal d'alarme contenant l'information que ladite au moins une source de lumière (La1, La2) est mal connectée au ballast électronique (100), en particulier lesquelles des deuxièmes connexions (21 à 27) sont mal connectées à ladite au moins une source de lumière (La1, La2).
